(19) **Europäisches Patentamt / European Patent Office / Office européen des brevets**

(11) **EP 3 101 828 B1**

(12) **EUROPEAN PATENT SPECIFICATION**

(45) Date of publication and mention
of the grant of the patent:
**08.05.2019 Bulletin 2019/19**

(51) Int Cl.:
*H04B 10/556* (2013.01)     *G02F 1/01* (2006.01)
*H04J 14/00* (2006.01)     *H04J 14/06* (2006.01)
*H04B 10/532* (2013.01)     *H04B 10/2507* (2013.01)
*H04B 10/61* (2013.01)

(21) Application number: **14881215.9**

(22) Date of filing: **31.01.2014**

(86) International application number:
**PCT/JP2014/052267**

(87) International publication number:
**WO 2015/114800 (06.08.2015 Gazette 2015/31)**

(54) **OPTICAL TRANSMISSION APPARATUS AND OPTICAL TRANSMISSION METHOD**

LICHTÜBERTRAGUNGSSYSTEM UND LICHTÜBERTRAGUNGSVERFAHREN

APPAREIL DE TRANSMISSION PAR FIBRE OPTIQUE ET PROCÉDÉ ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.12.2016 Bulletin 2016/49**

(73) Proprietor: **Mitsubishi Electric Corporation
Tokyo 100-8310 (JP)**

(72) Inventor: **YOSHIDA, Tsuyoshi
Tokyo 100-8310 (JP)**

(74) Representative: **Lavoix
Bayerstrasse 83
80335 München (DE)**

(56) References cited:
**WO-A1-2012/078445     WO-A1-2012/145071
WO-A1-2013/040129     JP-A- 2011 146 795
JP-A- 2012 119 759     US-A1- 2012 224 855
US-A1- 2013 071 119     US-A1- 2013 136 449**

## Description

[Technical Field]

This invention relates to an optical transmission apparatus and an optical transmission method using a digital coherent system.

[Background Art]

US 2012/224855 A1 discloses an optical phase conjugator deployed within a long-haul fiber-optic link of an optical WDM system.

To enable long-distance, large-capacity optical transmission, it is necessary to overcome limits on an optical signal-to-noise power ratio, to realize high-density wavelength multiplexing, and to overcome a fiber nonlinear optical effect.

First, on-off keying (OOK) is employed conventionally as a technique for overcoming limits on the optical signal-to-noise power ratio. In recent years, however, binary phase-shift keying (BPSK) and quaternary phase-shift keying (QPSK) have come into use.

Next, a method of doubling a number of transmitted bits per symbol using polarization multiplexing is known as a technique for realizing high-density wavelength multiplexing. In polarization multiplexing, independent emitted signals are allocated respectively to two orthogonal polarization components (vertical polarization and horizontal polarization).

Further, a method of increasing the number of transmitted bits per symbol by increasing a number of signal points, as in QPSK, described above, and 16-quadrature amplitude modulation (QAM), is known as another method. In QPSK and 16-QAM, emitted signals are allocated respectively to an in-phase axis (an I axis) and a quadrature-phase axis (a Q axis) by an optical emitter.

Furthermore, a digital coherent system has come to attention as a method of transmitting these optically modulated signals (see NPL 1 and NPL 2, for example). A digital coherent system is a system for receiving optically modulated signals using a combination of a synchronous detection system and digital signal processing. In this system, linear photoelectric conversion is performed by means of synchronous detection, and linear equalization is performed by means of digital signal processing. Here, linear equalization includes fixed linear equalization, semi-fixed linear equalization, and adaptive linear equalization.

Linear waveform distortion typically occurs on a transmission path due to wavelength dispersion, polarization mode dispersion (PMD), and so on. In a digital coherent system, as described above, photoelectric conversion and linear equalization are performed, and therefore the effects of this waveform distortion can be reduced. As a result, a superior equalization characteristic and superior noise resistance can be realized. As disclosed in NPL 1 and NPL 2, a polarization multiplexing QPSK system is used mainly in a digital coherent system.

Next, a digital back propagation method, in which an attempt is made to reproduce a signal at an emission end by simulating propagation in a reverse direction of a fiber by means of digital signal processing, is known as a technique used to compensate for waveform distortion caused by a nonlinear optical effect in the fiber (see NPL 3, for example). An optical phase conjugation method, in which phase distortion is canceled at a reception end by reversing the optical phase in the center of the transmission path, is also known (see NPL 4, for example).

However, in the system of compensating for the nonlinear optical effect, described above, the circuit scale must be enlarged in order to realize the digital signal processing, and a device is required to reverse the optical phase in the center of the transmission path.

Hence, a system in which light beams having a phase-conjugate relationship are transmitted in parallel has been developed, and is gaining attention, as a method for overcoming these problems (see PTL 1 and NPL 5, for example). In this method, waveform distortion on the transmission path is canceled by performing encoding processing on the emission side so that a pair (E, (E*)) of phase-conjugate light beams are transmitted through orthogonally polarized X/Y magnetic fields (EX, EY), for example, receiving the phase-conjugate light beams using a digital coherent system, and then synthesizing the two signals having a conjugate relationship in a digital domain. Here, E denotes a complex signal and (E*) denotes a complex conjugate of E.

At this time, waveform distortion, including the fiber nonlinear optical effect, is obtained approximately by perturbation analysis such that E is $\delta$ and (E*) is - ($\delta$*). Therefore, by performing EX + (EY*) processing on the reception side, the original signal E can be recovered alone while removing the perturbation component $\delta$. Note that (EY*) denotes the complex conjugate of EY. As a result, resistance to the fiber nonlinear optical effect can be increased without the need for an enlarged signal processing circuit and a device for reversing the optical phase in the center of the transmission path.

[Citation List]

[Patent Literature]

[PTL 1] Specification of U.S. Patent Application Publication No. 2013/0136449

[Non Patent Literature]

[NPL 1] Joe Berthold and six others, "100G Ultra Long Haul DWDM Framework Document", Optical Internetworking Forum, June 2009

[NPL 2] E. Yamazaki and 27 others, "Fast optical channel recovery in field demonstration of 100 Gbit/s Ethernet over OTN using real-time DSP", Optics Express, July 4, 2011, vol. 19, no. 14, pp. 13179-13184

[NPL 3] X. Li and six others, "Electronic post-compensation of WDM transmission impairments using coherent detection and digital signal processing", Optics Express, vol. 16, no. 2, pp. 880-888, 2008

[NPL 4] D. D. Marcenac and six others, "40 Gbit/s transmission over 406 km of NDSF using mid-span spectral inversion by four-wave-mixing in a 2 mm long semiconductor optical amplifier", Electronics Letters, vol. 33, no. 10, pp. 879-880, 1997

[NPL 5] X. Liu and four others, "Phase-conjugated twin waves for communication beyond the Kerr nonlinearity limit", Nature Photonics, vol. 7, pp. 560-568

[Summary of Invention]

[Technical Problem]

However, these conventional techniques exhibit the following problem.

In the methods of PTL 1 and NPL 5, described above, light beams having a phase-conjugate relationship must be transmitted in parallel, and therefore a frequency utilization efficiency is halved.

This invention has been designed to solve the problem described above, and an object thereof is to obtain an optical transmission apparatus and an optical transmission method with which a pair of phase-conjugate signals can be transmitted and synthesized on a reception side without a reduction in frequency utilization efficiency, thereby suppressing a reduction in transmission quality.

[Solution to Problem]

In an optical transmission apparatus according to this invention, an optical emission unit and an optical reception unit are connected to each other via an optical transmission unit. The optical emission unit includes: a signal arrangement unit adapted to generate respective pairs of phase-conjugate signals of a plurality of systems on the basis of externally input signals of a plurality of systems, mix together the pairs of phase-conjugate signals by using the equations $EX=EA+EB$ and $EY=(EA^*) - (EB^*)$, and then arrange the pairs of phase-conjugate signals discretely in orthogonally polarized electric fields, where EA denotes a complex signal of a first system (A) of the plurality of systems, EB denotes a complex signal of a second system (B) of the plurality of systems, $(EA^*)$ denotes a complex conjugate of EA, $(EB^*)$ denotes a complex conjugate of EB, EX denotes a X-polarized complex signal, and EY denotes a Y-polarized complex signal; and an optical modulation unit adapted to convert electric signals from the signal arrangement unit into optical signals and output the optical signals to the optical transmission unit, and the optical reception unit includes: a photoelectric conversion unit adapted to convert the optical signals transmitted by the optical transmission unit into electric signals; and a signal reconstruction unit adapted to reconstruct the original signals of the plurality of systems by synthesizing the intermixed and discretely arranged signals from the photoelectric conversion unit.

An optical transmission method according to this invention has an optical emission step and an optical reception step. The optical emission step includes: a signal arrangement step for generating respective pairs of phase-conjugate signals of a plurality of systems on the basis of externally input signals of a plurality of systems, mixing together the pairs of phase-conjugate signals by using the equations $EX=EA+EB$ and $EY=(EA^*) - (EB^*)$, and then arranging the pairs of phase-conjugate signals discretely in orthogonally polarized electric fields, where EA denotes a complex signal of a first system (A) of the plurality of systems, EB denotes a complex signal of a second system (B) of the plurality of systems, $(EA^*)$ denotes a complex conjugate of EA, $(EB^*)$ denotes a complex conjugate of EB, EX denotes a X-polarized complex signal, and EY denotes a Y-polarized complex signal; and an optical modulation step for converting electric signals generated in the signal arrangement step into optical signals, and the optical reception step includes: a photoelectric conversion step for converting the received optical signals into electric signals; and a signal reconstruction step for reconstructing the original signals of the plurality of systems by synthesizing the intermixed and discretely arranged electric signals that have been converted in the photoelectric conversion step.

[Advantageous Effects of Invention]

In the optical transmission apparatus and the optical transmission method according to this invention, the signal arrangement unit (step) generates respective pairs of phase-conjugate signals of a plurality of systems on the basis of externally input signals of a plurality of systems, mixes together the pairs of phase-conjugate signals, and then arranges the pairs of phase-conjugate signals discretely in orthogonally polarized electric fields, and the signal reconstruction unit (step) reconstructs the original signals of the plurality of systems by synthesizing the intermixed and discretely arranged signals. Therefore, in comparison with a case where a pair of phase-conjugate signals of a single system are transmitted, the frequency utilization efficiency can be improved, and in comparison with a conventional polarization multiplexed signal, a reduction in transmission quality can be suppressed.

In other words, a pair of phase-conjugate signals can be transmitted and synthesized on the reception side without a reduction in frequency utilization efficiency, and as a result, a reduction in transmission quality can be suppressed.

[Brief Description of Drawings]

Fig. 1 is a block diagram showing a configuration of an optical transmission apparatus according to a first embodiment of this invention.

Fig. 2 is a block diagram showing in detail a configuration of an optical emission unit shown in Fig. 1.

Fig. 3 is a block diagram showing in detail a configuration of an optical reception unit shown in Fig. 1.

Fig. 4 is an illustrative view showing pulse shapes relating to an interference prevention unit shown in Fig. 2 and an interference removal unit shown in Fig. 3.

[Description of Embodiments]

A preferred embodiment of an optical transmission apparatus and an optical transmission method according to this invention will be described below using the drawings. Identical or corresponding parts of the drawings will be described using identical reference symbols.

Note that the embodiment described below is a specific embodiment of the invention, and the invention is not limited to the scope of this embodiment. Further, the optical transmission method according to this invention and the optical transmission apparatus used to realize the optical transmission method are used in a high-density multiplexing long-distance optical transmission system employing a digital coherent system, for example.

First Embodiment

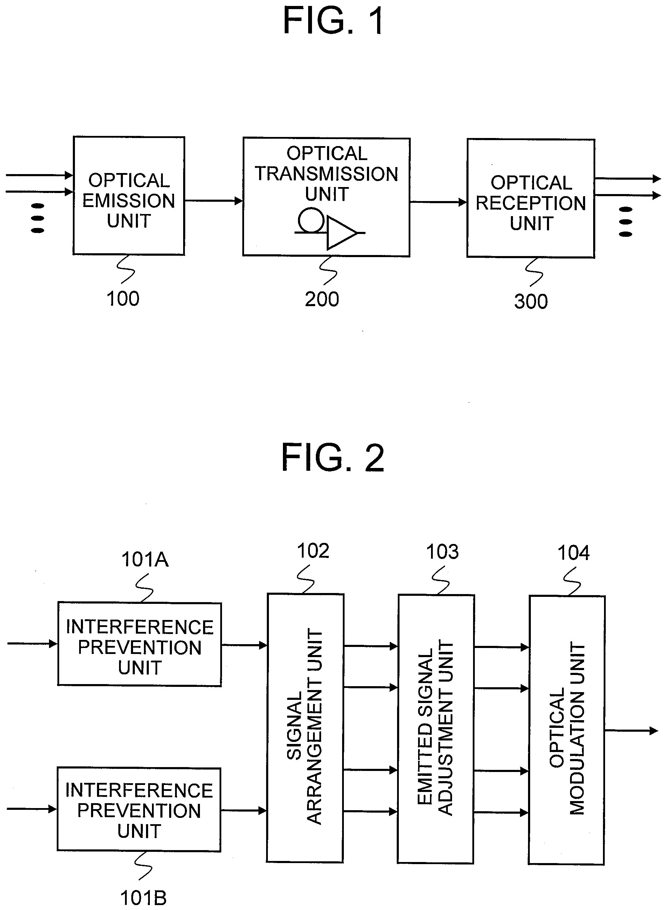

Fig. 1 is a block diagram showing a configuration of an optical transmission apparatus according to a first embodiment of this invention. Fig. 1 shows an example of an optical transmission system employing an optical transmission method according to the first embodiment of this invention. In Fig. 1, the optical transmission apparatus includes an optical emission unit 100, an optical transmission unit 200, and an optical reception unit 300.

The optical emission unit 100 emits an optical signal. The optical transmission unit 200 is constituted by an optical fiber that transmits the optical signal. The optical reception unit 300 receives the optical signal. Note that the optical transmission apparatus according to the first embodiment of this invention includes at least one of the optical emission unit 100 and the optical reception unit 300.

Fig. 2 is a block diagram showing in detail a configuration of the optical emission unit 100 shown in Fig. 1. In Fig. 2, the optical emission unit 100 includes interference prevention units 101A, 101B, a signal arrangement unit 102, an emitted signal adjustment unit 103, and an optical modulation unit 104.

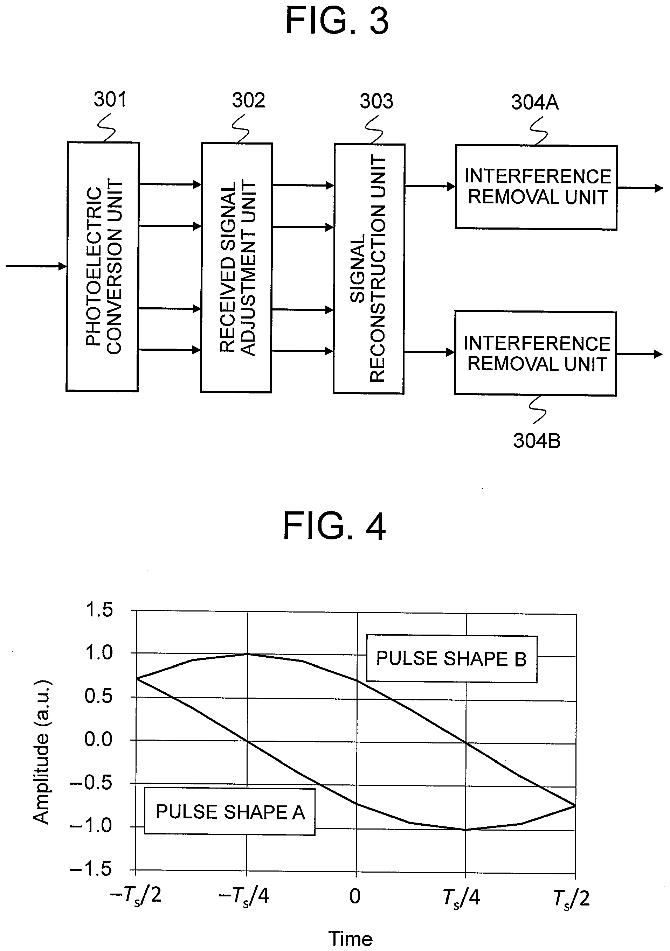

Fig. 3 is a block diagram showing in detail a configuration of the optical reception unit 300 shown in Fig. 1. In Fig. 3, the optical reception unit 300 includes a photoelectric conversion unit 301, a received signal adjustment unit 302, a signal reconstruction unit 303, and interference removal units 304A, 304B.

An operation of the optical transmission apparatus thus configured will be described below. The optical emission unit 100 converts signals of a plurality of systems, input from the outside, not shown in the drawings, into optical signals, and outputs the optical signals to the optical transmission unit 200.

In the optical emission unit 100, first, the signals of the plurality of systems, input from the outside, are input into the interference prevention units 101A, 101B. Fig. 2 shows an example in which signals of two systems are input. Here, the two signal systems are constituted by an A system and a B system, and the signal of the A system and the signal of the B system are input into the interference prevention unit 101A and the interference prevention unit 101B, respectively.

The interference prevention unit 101A forms a complex signal DA of the A system, input from the outside, into a pulse shape corresponding to $\cos(\pi t / Ts + 3\pi / 4)$, for example, and outputs a pulse-form complex signal EA to the signal arrangement unit 102. Further, the interference prevention unit 101B forms a complex signal DB of the B system, input from the outside, into a pulse shape corresponding to $\sin(\pi t / Ts + 3\pi / 4)$, for example, and outputs a pulse-form complex signal EB to the signal arrangement unit 102.

Here, Ts denotes a symbol repetition period, and t denotes time. Further, the time t is assumed to take -Ts / 2 to Ts / 2 within a single symbol. Fig. 4 shows an outline of the pulse shapes generated at this time. In Fig. 4, a pulse shape A and a pulse shape B have a mutually orthogonal relationship, and therefore correlation is obtained between the respective pulses at a reception end, with the result that mutual interference can be removed.

On the basis of the pulse-form complex signal EA of the A system, input from the interference prevention unit 101A, and the pulse-form complex signal EB of the B system, input from the interference prevention unit 101B, the signal arrangement unit 102 mixes together the complex signals of the two systems as shown below in Equation (1) and Equation (2), for example, and then arranges an X-polarized complex signal EX and a Y-polarized complex signal EY discretely.

$$EX = EA + EB \qquad (1)$$

$$EY = (EA^*) - (EB^*) \qquad (2)$$

In Equation (2), (EA*) denotes a complex conjugate of EA, and (EB*) denotes a complex conjugate of EB. EX and EY thus generated are constituted respectively by an I axis and a Q axis, and are therefore handled as a four-lane signal constituted by four lanes XI, XQ, YI, YQ. The signal arrangement unit 102 outputs the four-lane signal to the emitted signal adjustment unit 103.

In other words, the signal arrangement unit 102 generates respective pairs of phase-conjugate signals of the plurality of systems on the basis of the externally input signals of the plurality of systems, mixes the pairs of phase-conjugate signals together, and then arranges the pairs of phase-conjugate signals discretely in orthogonally polarized electric fields.

The emitted signal adjustment unit 103 performs adjustment processing such as waveform equalization, spectral shaping, delay compensation, or addition of a differential delay on the four-lane signal input from the signal arrangement unit 102, and then outputs a four-lane electric signal subjected to the respective types of adjustment processing to the optical modulation unit 104.

On the basis of the four-lane electric signal input from the emitted signal adjustment unit 103, the optical modulation unit 104 modulates unmodulated light generated in the interior of the optical modulation unit 104 using a polarization multiplexing type I/Q optical modulator, for example, and outputs a modulated optical signal to the optical transmission unit 200.

The optical transmission unit 200 transmits the optical signal input from the optical emission unit 100, and outputs the transmitted optical signal to the optical reception unit 300. Here, waveform distortion occurs in the optical transmission unit 200 due to wavelength dispersion and the nonlinear optical effect. At this time, the modulated optical signal is constituted by a plurality of (two in this example) pairs of phase-conjugate signals, and correlation occurs in the waveform distortion between the pairs of phase-conjugate signals.

The optical reception unit 300 recovers the original signals of the plurality of systems (in this example, the signal of the A system and the signal of the B system) that existed prior to the phase conjugation processing from the optical signal input from the optical transmission unit 200, which is constituted by the group of phase-conjugate signals of the plurality of systems, and outputs the recovered signals to the outside, not shown in the drawings.

In the interior of the optical reception unit 300, first, the signal input from the optical transmission unit 200 is input into the photoelectric conversion unit 301.

The photoelectric conversion unit 301 includes local oscillation light in the interior thereof. The photoelectric conversion unit 301 performs coherent detection for the purpose of photoelectric conversion by mixing together the optical signal input from the optical transmission unit 200 and the local oscillation light so that the optical signal and the local oscillation light interfere with each other. Further, the photoelectric conversion unit 301 outputs an electric signal obtained as a result of the coherent detection to the received signal adjustment unit 302.

In other words, a four-lane electric signal obtained by mixing together signals of two polarizations and I/Q axes is input into the received signal adjustment unit 302 from the photoelectric conversion unit 301. The received signal adjustment unit 302 separates the electric signal into the two polarizations using electric processing, performs adjustment processing such as delay adjustment, equalization processing, and carrier wave frequency/phase recovery, eliminates waveform distortion and random noise caused by the nonlinear optical effect, and outputs a four-lane electric signal subjected to the respective types of adjustment processing to the signal reconstruction unit 303.

On the basis of the four-lane electric signal input from the received signal adjustment unit 302, the signal reconstruction unit 303 reconstructs the complex signals EA and EB of the A/B systems that were mixed together and arranged discretely in the X/Y polarizations, as shown below in Equation (3) and Equation (4), for example. In other words, the signal reconstruction unit 303 reconstructs the original signals of the plurality of systems by synthesizing the intermixed and discretely arranged signals.

$$EA = EX + (EY^*) \qquad (3)$$

$$EB = EX - (EY^*) \qquad (4)$$

In Equation (3) and Equation (4), (EY*) denotes a complex conjugate of EY. The signal reconstruction unit 303 outputs the reconstructed complex signal EA of the A system to the interference removal unit 304A, and outputs the reconstructed complex signal EB of the B system to the interference removal unit 304B. Note that the complex signals EA and EB take the pulse shapes shown in Fig. 4.

Here, by performing the processing of Equation (3), waveform distortion caused by the fiber nonlinear optical effect can be canceled from the phase-conjugate pair EA and (EA*) relating to the A system. Further, by performing the processing of Equation (4), waveform distortion caused by the fiber nonlinear optical effect can be canceled from the phase-conjugate pair EB and (EB*) relating to the B system.

The interference removal unit 304A correlates the reconstructed complex signal EA of the A system, input from the signal reconstruction unit 303, with the pulsation processing performed by the interference prevention unit 101A. In other words, the interference removal unit 304A recovers the original complex signal DA of the A system by convolving cos ($\pi t$ / Ts + $3\pi$ / 4), and then outputs the recovered complex signal to the outside, not shown in the drawings.

Further, the interference removal unit 304B correlates the reconstructed complex signal EB of the B system, input from the signal reconstruction unit 303, with the pulsation processing performed by the interference prevention unit 101B. In other words, the interference removal unit 304B recovers the original complex signal DB of the B system by convolving sin ($\pi$t / Ts + 3$\pi$ / 4), and then outputs the recovered complex signal to the outside, not shown in the drawings.

In the first embodiment of this invention, an electric signal band is limited to approximately half the symbol repetition frequency in the emitted signal adjustment unit 103 and the received signal adjustment unit 302, and therefore the band of the optical signal generated by the optical modulation unit 104 can be narrowed to approximately the symbol repetition frequency.

By mixing together a plurality of pairs of phase-conjugate signals, arranging the signals discretely in the X/Y polarizations, transmitting the signals, and then synthesizing the signals on the reception side, resistance to the fiber nonlinear optical effect can be increased. Further, since the plurality of pairs of phase-conjugate signals are multiplexed on an identical wavelength, a reduction in frequency utilization efficiency can be avoided. As a result, a transmittable distance in a high-density multiplexing digital coherent optical transmission system can be increased.

According to the first embodiment, as described above, the signal arrangement unit generates respective pairs of phase-conjugate signals of a plurality of systems on the basis of externally input signals of the plurality of systems, mixes together the pairs of phase-conjugate signals, and then arranges the pairs of phase-conjugate signals discretely in orthogonally polarized electric fields, and the signal reconstruction unit reconstructs the original signals of the plurality of systems by synthesizing the intermixed and discretely arranged signals.

Therefore, in comparison with a case where a pair of phase-conjugate signals of a single system are transmitted, the frequency utilization efficiency can be improved, and in comparison with a conventional polarization multiplexed signal, a reduction in transmission quality can be suppressed.

In other words, a pair of phase-conjugate signals can be transmitted and synthesized on the reception side without a reduction in frequency utilization efficiency, and as a result, a reduction in transmission quality can be suppressed.

Furthermore, according to the first embodiment, even when a difference in signal quality occurs between the X polarization and the Y polarization due to polarization dependent loss and the like, the signals are synthesized on the reception side, and therefore the difference in signal quality can be reduced. In other words, a deviation in a code error can be prevented, thereby preventing deterioration of an error correction performance.

## Claims

1. An optical transmission apparatus comprising an optical emission unit (100) and an optical reception unit (300) connected to each other via an optical transmission unit (200), **characterized in that** the optical emission unit (100) includes:

   a signal arrangement unit (102) adapted to generate respective pairs of phase-conjugate signals of a plurality of systems on the basis of externally input signals of a plurality of systems, mix together the pairs of phase-conjugate signals by using the equations EX=EA+EB and EY=(EA*) - (EB*), and then arrange the pairs of phase-conjugate signals discretely in orthogonally polarized electric fields, where EA denotes a complex signal of a first system (A) of the plurality of systems, EB denotes a complex signal of a second system (B) of the plurality of systems, (EA*) denotes a complex conjugate of EA, (EB*) denotes a complex conjugate of EB, EX denotes a X-polarized complex signal, and EY denotes a Y-polarized complex signal; and
   an optical modulation unit (104) adapted to convert electric signals from the signal arrangement unit (102) into optical signals and output the optical signals to the optical transmission unit (200), and that
   the optical reception unit (300) includes:

   a photoelectric conversion unit (301) adapted to convert the optical signals transmitted by the optical transmission unit (200) into electric signals; and
   a signal reconstruction unit (303) adapted to reconstruct the original signals of the plurality of systems by synthesizing the intermixed and discretely arranged signals from the photoelectric conversion unit (301).

2. The optical transmission apparatus according to claim 1, wherein the optical emission unit (100) further includes an interference prevention unit (101A, 101B) adapted to prevent mutual interference between the signals of the plurality of systems in advance.

3. The optical transmission apparatus according to claim 2, wherein the interference prevention unit (101A, 101B) is adapted to allocate the signals of the plurality of systems to pulse shapes having a mutually orthogonal relationship.

4. The optical transmission apparatus according to claim 1, wherein the optical reception unit (300) further includes an interference removal unit (304A, 304B) adapted to remove mutual interference between the signals of the plurality of systems.

5. The optical transmission apparatus according to claim 4, wherein the interference removal unit (304A, 304B) is adapted to suppress interference between the signals of the plurality of systems allocated to the pulse shapes having a mutually orthogonal relationship so that the signals of the plurality of systems can be received independently by correlating the signals of the plurality of systems.

6. The optical transmission apparatus according to claim 1, wherein the optical emission unit (100) further includes an emitted signal adjustment unit (103) adapted to perform at least one type of adjustment processing on an output from the signal arrangement unit (102), the adjustment processing including performing waveform equalization, spectral shaping, delay compensation, and differential delay addition on an emitted signal.

7. The optical transmission apparatus according to claim 1, wherein the optical reception unit (300) further includes a received signal adjustment unit (302) adapted to perform at least one type of adjustment processing on an output from the photoelectric conversion unit (301), the adjustment processing including polarization separation, delay adjustment, equalization processing, and carrier wave frequency/phase recovery.

8. An optical transmission method comprising: an optical emission step; and an optical reception step, **characterized in that** the optical emission step includes:

a signal arrangement step for generating respective pairs of phase-conjugate signals of a plurality of systems on the basis of externally input signals of a plurality of systems, mixing together the pairs of phase-conjugate signals by using the equations EX=EA+EB and EY=(EA*) - (EB*), and then arranging the pairs of phase-conjugate signals discretely in orthogonally polarized electric fields, where EA denotes a complex signal of a first system (A) of the plurality of systems, EB denotes a complex signal of a second system (B) of the plurality of systems, (EA*) denotes a complex conjugate of EA, (EB*) denotes a complex conjugate of EB, EX denotes a X-polarized complex signal, and EY denotes a Y-polarized complex signal; and

an optical modulation step for converting electric signals generated in the signal arrangement step into optical signals, and that the optical reception step includes:

a photoelectric conversion step for converting the received optical signals into electric signals; and

a signal reconstruction step for reconstructing the original signals of the plurality of systems by synthesizing the intermixed and discretely arranged electric signals that have been converted in the photoelectric conversion step.

**Patentansprüche**

1. Vorrichtung zur optischen Übertragung, Folgendes umfassend:

eine Einheit zur optischen Ausstrahlung (100) und eine Einheit zum optischen Empfang (300), die über eine Einheit zur optischen Übertragung (200) miteinander verbunden sind, **dadurch gekennzeichnet, dass** die Einheit zur optischen Ausstrahlung (100) Folgendes beinhaltet:

eine Signalanordnungseinheit (102), die dafür eingerichtet ist, jeweilige Paare von phasenkonjugierten Signalen von mehreren Systemen auf der Grundlage externer Eingabesignale von mehreren Systemen zu erzeugen, die Paare phasenkonjugierter Signale unter Verwendung der Gleichungen EX = EA + EB und EY = (EA*) - (EB*) miteinander zu mischen und dann die Paare phasenkonjugierter Signale in orthogonal polarisierten elektrischen Feldern einzeln anzuordnen, wobei EA ein komplexes Signal eines ersten Systems (A) der mehreren Systeme bezeichnet, EB ein komplexes Signal eines zweiten Systems (B) der mehreren Systeme bezeichnet, (EA*) ein komplexes Konjugat von EA bezeichnet, (EB*) ein komplexes Konjugat von EB bezeichnet, EX ein X-polarisiertes komplexes Signal bezeichnet und EY ein Y-polarisiertes komplexes Signal bezeichnet, und

eine Einheit zur optischen Modulation (104), die dafür eingerichtet ist, elektrische Signale von der Signalanordnungseinheit (102) in optische Signale umzuwandeln und die optischen Signale an die Einheit zur optischen Übertragung (200) auszugeben, und dass

die Einheit zum optischen Empfang (300) Folgendes beinhaltet:

eine Einheit zur fotoelektrischen Umwandlung (301), die dafür eingerichtet ist, die optischen Signale, die durch die Einheit zur optischen Übertragung (200) übertragen werden, in elektrische Signale umzuwandeln, und

eine Signalrekonstruktionseinheit (303), die dafür eingerichtet ist, die ursprünglichen Signale der mehreren Systeme durch Synthetisieren der miteinander vermischten und einzeln angeordneten Signale von der Einheit zur fotoelektrischen Umwandlung (301) zu rekonstruieren.

2. Vorrichtung zur optischen Übertragung nach Anspruch 1, wobei die Einheit zur optischen Ausstrahlung (100) ferner eine Interferenzverhinderungseinheit (101A, 101B) beinhaltet, die dafür eingerichtet ist, wechselseitige Interferenzen zwischen den Signalen der mehreren Systeme im Vorhinein zu verhindern.

3. Vorrichtung zur optischen Übertragung nach Anspruch 2, wobei die Interferenzverhinderungseinheit (101A, 101B) dafür eingerichtet ist, den Signalen der mehreren Systeme Impulsformen zuzuweisen, die ein wechselseitig orthogonales Verhältnis aufweisen.

4. Vorrichtung zur optischen Übertragung nach Anspruch 1, wobei die Einheit zum optischen Empfang (300) ferner eine Interferenzentfernungseinheit (304A, 304B) beinhaltet, die dafür eingerichtet ist, wechselseitige Interferenzen zwischen den Signalen der mehreren Systeme zu entfernen.

5. Vorrichtung zur optischen Übertragung nach Anspruch 4, wobei die Interferenzentfernungseinheit (304A, 304B) dafür eingerichtet ist, Interferenzen zwischen den Signalen der mehreren Systeme zu unterdrücken, die den Impulsformen zugewiesen sind, die ein wechselseitig orthogonales Verhältnis aufweisen, so dass die Signale der mehreren Systeme unabhängig empfangen werden können, indem die Signale der mehreren Systeme korreliert werden.

6. Vorrichtung zur optischen Übertragung nach Anspruch 1, wobei die Einheit zur optischen Ausstrahlung (100) ferner eine Einheit zum Abstimmen ausgestrahlter Signale (103) beinhaltet, die dafür eingerichtet ist, an einer Ausgabe der Signalanordnungseinheit (102) mindestens eine Art von Abstimmungsbearbeitung durchzuführen, wobei die Abstimmungsbearbeitung das Ausführen von Wellenformentzerrung, Spektralformung, Verzögerungskompensation und Addition differentieller Verzögerung zu einem ausgestrahlten Signal beinhaltet.

7. Vorrichtung zur optischen Übertragung nach Anspruch 1, wobei die Einheit zum optischen Empfang (300) ferner eine Einheit zum Abstimmen empfangener Signale (302) beinhaltet, die dafür eingerichtet ist, mindestens eine Art von Abstimmungsbearbeitung an einer Ausgabe der Einheit zur fotoelektrischen Umwandlung (301) auszuführen, wobei die Abstimmungsbearbeitung Polarisationstrennung, Verzögerungsabstimmung, Ausgleichsbearbeitung und Trägerwellenfrequenz/phasen-Wiederherstellung beinhaltet.

8. Verfahren zur optischen Übertragung, Folgendes umfassend: einen Schritt optischer Ausstrahlung und einen Schritt optischen Empfangs,
**dadurch gekennzeichnet, dass** der Schritt optischen Empfangs Folgendes beinhaltet:

einen Signalanordnungsschritt zum Erzeugen jeweiliger Paare von phasenkonjugierten Signalen von mehreren Systemen auf der Grundlage externer Eingabesignale von mehreren Systemen, zum Miteinander-Mischen der Paare phasenkonjugierter Signale unter Verwendung der Gleichungen $EX = EA + EB$ und $EY = (EA^*) - (EB^*)$ und dann Anordnen der Paare phasenkonjugierter Signale einzeln in orthogonal polarisierten elektrischen Feldern, wobei $EA$ ein komplexes Signal eines ersten Systems (A) der mehreren Systeme bezeichnet, $EB$ ein komplexes Signal eines zweiten Systems (B) der mehreren Systeme bezeichnet, $(EA^*)$ ein komplexes Konjugat von $EA$ bezeichnet, $(EB^*)$ ein komplexes Konjugat von $EB$ bezeichnet, $EX$ ein X-polarisiertes komplexes Signal bezeichnet und $EY$ ein Y-polarisiertes komplexes Signal bezeichnet, und
einen Schritt der optischen Modulation zum Umwandeln elektrischer Signale, die im Signalanordnungsschritt erzeugt werden, in optische Signale, und dass der Schritt optischen Empfangs Folgendes beinhaltet:

einen Schritt zur fotoelektrischen Umwandlung zum Umwandeln der empfangenen optischen Signale in elektrische Signale und einen Signalrekonstruktionsschritt zum Rekonstruieren der ursprünglichen Signale der mehreren Systeme durch Synthetisieren der miteinander vermischten und einzeln angeordneten elektrischen Signale, die im Schritt zur fotoelektrischen Umwandlung umgewandelt wurden.

## Revendications

1. Appareil de transmission par fibre optique comprenant une unité d'émission par fibre optique (100) et une unité de réception par fibre optique (300) connectées l'une à l'autre par l'intermédiaire d'une unité de transmission par fibre optique (200), **caractérisé en ce que** l'unité d'émission par fibre optique (100) inclut :

une unité d'agencement de signaux (102) apte à générer des paires respectives de signaux conjugués en phase d'une pluralité de systèmes sur la base de signaux appliqués en entrée depuis l'extérieur d'une pluralité de systèmes, à mélanger ensemble les paires de signaux conjugués en phase en utilisant les équations EX = EA + EB et EY = (EA*) - (EB*), et ensuite à agencer les paires de signaux conjugués en phase, de manière discrète, en des champs électriques à polarisation orthogonale, où « EA » désigne un signal complexe d'un premier système (A) de la pluralité de systèmes, « EB » désigne un signal complexe d'un second système (B) de la pluralité de systèmes, « (EA*) » désigne un conjugué complexe du signal « EA », « (EB*) » désigne un conjugué complexe du signal « EB », « EX » désigne un signal complexe à polarisation X, et « EY » désigne un signal complexe à polarisation Y ; et
une unité de modulation optique (104) apte à convertir des signaux électriques provenant de l'unité d'agencement de signaux (102) en des signaux optiques, et à fournir en sortie les signaux optiques à l'unité de transmission par fibre optique (200), et **caractérisé en ce que**
l'unité de réception par fibre optique (300) inclut :

une unité de conversion photoélectrique (301) apte à convertir les signaux optiques transmis par l'unité de transmission par fibre optique (200) en des signaux électriques ; et
une unité de reconstruction de signaux (303) apte à reconstruire les signaux d'origine de la pluralité de systèmes, en synthétisant les signaux mélangés ensemble et agencés de manière discrète en provenance de l'unité de conversion photoélectrique (301).

2. Appareil de transmission par fibre optique selon la revendication 1, dans lequel l'unité d'émission par fibre optique (100) comprend en outre une unité de prévention de brouillage (101A, 101B) apte à empêcher un brouillage mutuel entre les signaux de la pluralité de systèmes à l'avance.

3. Appareil de transmission par fibre optique selon la revendication 2, dans lequel l'unité de prévention de brouillage (101A, 101B) est apte à affecter les signaux de la pluralité de systèmes à des formes d'impulsions présentant une relation mutuellement orthogonale.

4. Appareil de transmission par fibre optique selon la revendication 1, dans lequel l'unité de réception par fibre optique (300) inclut en outre une unité de suppression de brouillage (304A, 304B) apte à supprimer un brouillage mutuel entre les signaux de la pluralité de systèmes.

5. Appareil de transmission par fibre optique selon la revendication 4, dans lequel l'unité de suppression de brouillage (304A, 304B) est apte à supprimer un brouillage entre les signaux de la pluralité de systèmes affectés aux formes d'impulsions présentant une relation mutuellement orthogonale, de sorte que les signaux de la pluralité de systèmes peuvent être reçus indépendamment en corrélant les signaux de la pluralité de systèmes.

6. Appareil de transmission par fibre optique selon la revendication 1, dans lequel l'unité d'émission par fibre optique (100) inclut en outre une unité d'ajustement de signal émis (103) apte à mettre en oeuvre au moins un type de traitement d'ajustement sur une sortie provenant de l'unité d'agencement de signaux (102), le traitement d'ajustement incluant la mise en oeuvre d'une égalisation de forme d'onde, d'une mise en forme spectrale, d'une compensation de retard et d'une addition de retard différentiel sur un signal émis.

7. Appareil de transmission par fibre optique selon la revendication 1, dans lequel l'unité de réception par fibre optique (300) inclut en outre une unité d'ajustement de signal reçu (302) apte à mettre en oeuvre au moins un type de traitement d'ajustement sur une sortie en provenance de l'unité de conversion photoélectrique (301), le traitement d'ajustement incluant une séparation de polarisation, un ajustement de retard, un traitement d'égalisation et une récupération de fréquence/phase d'onde porteuse.

8. Procédé de transmission par fibre optique comprenant : une étape d'émission par fibre optique ; et une étape de réception par fibre optique, **caractérisé en ce que** l'étape d'émission par fibre optique comprend :

une étape d'agencement de signaux consistant à générer des paires respectives de signaux conjugués en phase d'une pluralité de systèmes sur la base de signaux appliqués en entrée depuis l'extérieur d'une pluralité de systèmes, à mélanger ensemble les paires de signaux conjugués en phase en utilisant les équations EX = EA + EB et EY = (EA*) - (EB*), et ensuite à agencer les paires de signaux conjugués en phase, de manière discrète, en des champs électriques à polarisation orthogonale, où « EA » désigne un signal complexe d'un premier système (A) de la pluralité de systèmes, « EB » désigne un signal complexe d'un second système (B) de la pluralité de systèmes, « (EA*) » désigne un conjugué complexe du signal « EA », « (EB*) » désigne un conjugué complexe du signal « EB », « EX » désigne un signal complexe à polarisation X, et « EY » désigne un signal complexe à polarisation Y ; et

une étape de modulation optique consistant à convertir des signaux électriques, générés à l'étape d'agencement de signaux, en des signaux optiques ; et **en ce que** l'étape de réception par fibre optique inclut :

une étape de conversion photoélectrique consistant à convertir les signaux optiques reçus en des signaux électriques ; et
une étape de reconstruction de signaux consistant à reconstruire les signaux d'origine de la pluralité de systèmes, en synthétisant les signaux mélangés ensemble et agencés de manière discrète qui ont été convertis à l'étape de conversion photoélectrique.

# FIG. 1

# FIG. 2

# FIG. 3

301

PHOTOELECTRIC CONVERSION UNIT

302

RECEIVED SIGNAL ADJUSTMENT UNIT

303

SIGNAL RECONSTRUCTION UNIT

304A

INTERFERENCE REMOVAL UNIT

INTERFERENCE REMOVAL UNIT

304B

# FIG. 4

PULSE SHAPE B

PULSE SHAPE A

Amplitude (a.u.)

1.5
1.0
0.5
0.0
-0.5
-1.0
-1.5

$-T_s/2$  $-T_s/4$  0  $T_s/4$  $T_s/2$

Time

## REFERENCES CITED IN THE DESCRIPTION

### Patent documents cited in the description

- US 2012224855 A1

- US 20130136449 A

### Non-patent literature cited in the description

- **JOE BERTHOLD.** 100G Ultra Long Haul DWDM Framework Document. *Optical Internetworking Forum,* June 2009
- **E. YAMAZAKI.** Fast optical channel recovery in field demonstration of 100 Gbit/s Ethernet over OTN using real-time DSP. *Optics Express,* 04 July 2011, vol. 19 (14), 13179-13184
- **X. LI.** Electronic post-compensation of WDM transmission impairments using coherent detection and digital signal processing. *Optics Express,* 2008, vol. 16 (2), 880-888

- **D. D. MARCENAC.** 40 Gbit/s transmission over 406 km of NDSF using mid-span spectral inversion by four-wave-mixing in a 2 mm long semiconductor optical amplifier. *Electronics Letters,* 1997, vol. 33 (10), 879-880
- **X. LIU.** Phase-conjugated twin waves for communication beyond the Kerr nonlinearity limit. *Nature Photonics,* vol. 7, 560-568